# EUROPEAN PATENT APPLICATION

(11) **EP 3 142 231 A1**
(43) Date of publication of application: **15.03.2017**
(21) Application number: 15184236.6
(22) Date of filing: 08.09.2015
(51) Int. Cl.: H02K 9/12, H02K 1/27, H02K 1/30, H02K 1/32

(54) **AN ELECTRIC POWER GENERATOR**

(71) Applicant: ABB Technology AG, 8050 Zürich (CH)
(72) Inventor: Halme, Matti, 00380 Helsinki (FI); Raute, Rami, 00980 Helsinki (FI); Vartiainen, Ari, 00380 Helsinki (FI); Härkönen, Tuomas, 00380 Helsinki (FI); Keitamo, Jori-Pekka, 00380 Helsinki (FI)
(74) Representative: Kolster Oy Ab

(57) **Abstract**

The electric power generator comprises a shaft (10), a rotor (20), and a stator (30) surrounding the rotor (20). The rotor (20) comprises an inner cylinder (21) attached to the shaft (10), an outer cylinder (22), and a transverse support flange (23) supporting the outer cylinder (22) on the inner cylinder (21). Permanent magnets (35) are attached to an outer surface (22A) of the outer cylinder (22). The air gap (G1) between the rotor (20) and the stator (30) forms a first axial (X-X) cooling air channel (A1). A second axial (X-X) cooling air channel (A2) extending in the axial direction between axial (X-X) ends (E10, E20) of the outer cylinder (22) and extending in the radial direction from the inner surface (22B) of the outer cylinder (22) a predefined radial width (W2) inwards towards the shaft (10) is formed. The predefined radial width (W2) is in the range of 1 to 10 times the radial width (W1) of the air gap (G1). Axial (X-X) openings (O1) are provided in the transverse support flange (23) in the area of the second cooling air channel (A2) so that cooling air (L1) can pass through the second axial cooling air channel (A2) between the axial (X-X) ends (E10, E20) of the outer cylinder (22).

## Description

### FIELD OF THE INVENTION

The present invention relates to an electric power generator.

### BACKGROUND ART

US patent application 2011/0254391 discloses an electrical motor having radially offset cooling stream. The electric motor comprises a rotor having a single radial cooling slot in the axial middle portion of the rotor. The radial cooling duct divides the rotor into a first rotor portion and a second rotor portion. The rotor comprises further axially running cooling ducts, of which the axial centres lie on two coaxial cylinders. A first axial cooling duct slot passes from a first axial end of the rotor to the radial cooling slot. A second axial cooling duct passes from an opposite second axial end of the rotor to the radial cooling slot. A third axial cooling duct passes from the first end of the rotor to the radial cooling slot. The third axial cooling duct and the second axial cooling duct have coinciding axial centre lines. The radial distance from the rotor axis to the axial centre of the first axial cooling duct is smaller than the radial distance from the rotor axis to the axial centres of the second axial cooling duct and the third axial cooling duct. There is a radial spacer arrangement in the radial cooling slot constructed to route a first cooling stream from the first axial cooling duct into the second axial cooling duct. A second cooling stream is introduced into the third cooling duct at the first end of the rotor, said second cooling stream entering the radial slot in the axial middle portion of the rotor and being directed into the air gap between the rotor and the stator from the outer circumference of said radial slot. The second cooling stream passes from the air gap between the rotor and the stator into the radial slots in the stator and further from the radial slots of the stator to the outer circumference of the stator. A stator cooling air stream passes axially on the outer surface of the stator between the back beams of the stator from the first axial end of the stator to the second axial end of the stator. The pressure discs at each axial end of the stator close the air gap between the rotor and the stator in the axial direction. Each cooling stream is thus moved from one radial level to another radial level in the radial cooling slot.

A rotor in a permanent magnet generator comprises normally an inner cylinder coaxial with the shaft, an outer cylinder coaxial with the shaft and positioned at a radial distance from the inner cylinder, and a transverse support flange supporting the outer cylinder at the inner cylinder. The inner cylinder is attached to the shaft. The outer cylinder has a first axial end, a second axial end, an inner surface and an outer surface forming an outer rotor surface. Permanent magnets are attached to the outer rotor surface. There are axial openings in the transverse support flange.

A permanent magnet generator is often cooled asymmetrically i.e. cooling air is circulated from a first end of the generator to a second end of the generator. The cooling air circulation is divided into a main flow passing axially through the air gap between the rotor and the stator and into a bypass flow passing axially through the centre of the rotor between the outer cylinder and the inner cylinder of the rotor and thereby through the axial openings in the transverse support flange of the rotor. The main flow cools the ends of the stator windings and the outer surface of the rotor. The bypass flow cools the ends of the stator winding. The main flow is restricted by the great pressure loss in the air gap and the transfer of heat from the hot stator to the rotor. The bypass flow must be restricted by restricting the size of the holes in the transverse support flange so that the main flow remains at an acceptable level. This means that the pumping power must be increased over the optimal level in order to overcome the pressure drop.

It is important to keep the temperature of the permanent magnets at a constant level. A permanent magnet will demagnetize if the temperature of the permanent magnet exceeds a prescribed maximum value e.g. 80 degrees Celsius. The permanent magnets are attached to the outer surface of the outer cylinder of the rotor, which means that heat generated by the permanent magnets will be transferred to the outer cylinder of the rotor.

There are permanent magnets on the market that can withstand a higher temperature without demagnetizing, but they are very expensive. The magnetic properties of such permanent magnets are also poorer.

### BRIEF DESCRIPTION OF THE INVENTION

An object of the present invention is an improved electric power generator.

The electric power generator according to the invention is characterized by what is stated in the independent claim 1.

The electric power generator comprises a shaft, a rotor, and a stator surrounding the rotor and being attached to a frame construction,
the shaft being rotatably supported with bearings at the frame construction of the electric power generator,
the rotor comprises an inner cylinder coaxial with the shaft, an outer cylinder coaxial with the shaft and positioned at a radial distance from the inner cylinder, and a transverse support flange supporting the outer cylinder on the inner cylinder, the inner cylinder being attached to the shaft, the outer cylinder having a first axial end, a second axial end, an inner surface and an outer surface forming an outer rotor surface, permanent magnets being attached to the outer rotor surface,
an air gap with a radial width being formed between the rotor and the stator, said air gap forming a first axial cooling air channel.

The electric power generator is characterized in that
a second axial cooling air channel extending in the axial direction between the axial ends of the outer cylinder of the rotor and extending in the radial direction from the inner surface of the outer cylinder of the rotor a predefined radial width inwards towards the shaft is formed, said predefined radial width being in the range of 1 to 10 times the radial width of the air gap between the rotor and the stator, axial openings being provided in the transverse support flange of the rotor in the area of the second cooling air channel so that cooling air can pass through the second axial cooling air channel between the axial ends of the outer cylinder of the rotor.

The second cooling air channel directs the bypass flow to the radial inner surface of the outer cylinder in the rotor. This means that the bypass flow will also cool the outer cylinder of the rotor.

The transfer of heat will be more efficient within the rotor. The heat transfer rate at the inner surface of the outer cylinder of the rotor will increase. It is also possible to increase the surface area of the inner surface of the outer cylinder of the rotor e.g. by providing axially directed rivets on the inner surface of the outer cylinder of the rotor. It is thus possible to transfer greater amounts of heat to the cooling air from the rotor. It will be easier to keep the maximum temperature of the permanent magnets in the rotor at a desired level. This makes it possible to use several different pole constructions in the rotor and/or to cool the rotor with a smaller total amount of cooling air and a smaller total pressure loss. This reduces the amount of cooling power needed.

### BRIEF DESCRIPTION OF THE DRAWINGS

In the following the invention will be described in greater detail by means of preferred embodiments with reference to the attached drawings, in which
Figure 1 shows an axial cross section of an electric power generator according to the invention.
Figure 2 shows a radial cross section of the electric power generator according to figure 1.
Figure 3 shows a radial cross section of a second embodiment of an electric power generator according to the invention.
Figure 4 shows a radial cross section of a third embodiment of an electric power generator according to the invention.

### DETAILED DESCRIPTION OF THE INVENTION

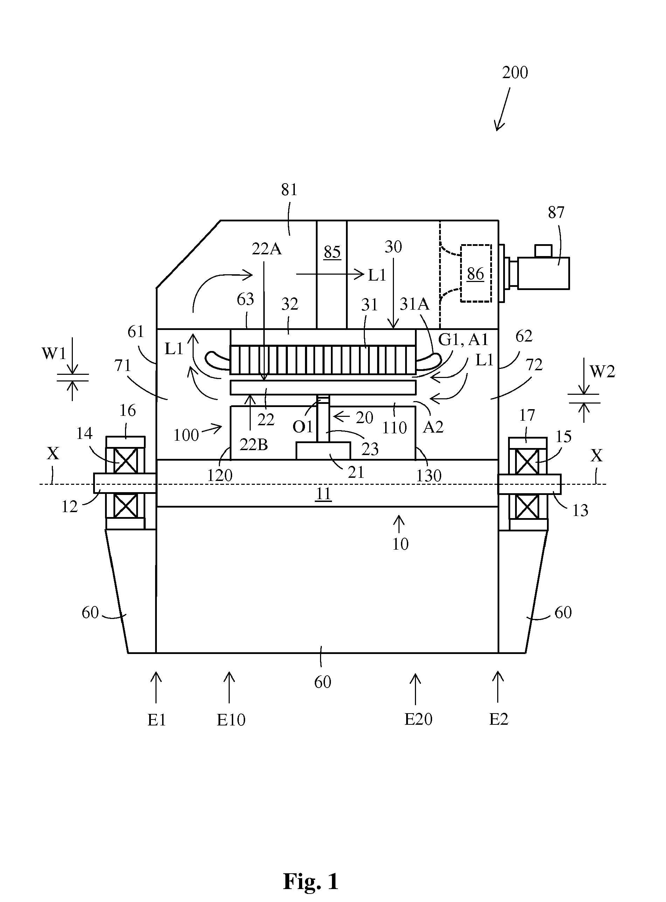

Figure 1 shows an axial cross section of an electric power generator according to the invention. The electric power generator comprises a shaft 10, a rotor 20, a stator 30, and a frame construction 60. Only the upper portion of the rotor 10 and the stator 20 is shown in the figure.

The shaft 10 comprises a middle portion 11 and two opposite end portions 12, 13. The shaft 10 is rotatably supported with bearings 14, 15 positioned in respective bearing housings 16, 17 at the frame construction 60 of the electric machine 200. The bearings 14, 15 are positioned at respective end portions 12, 13 of the shaft 10.

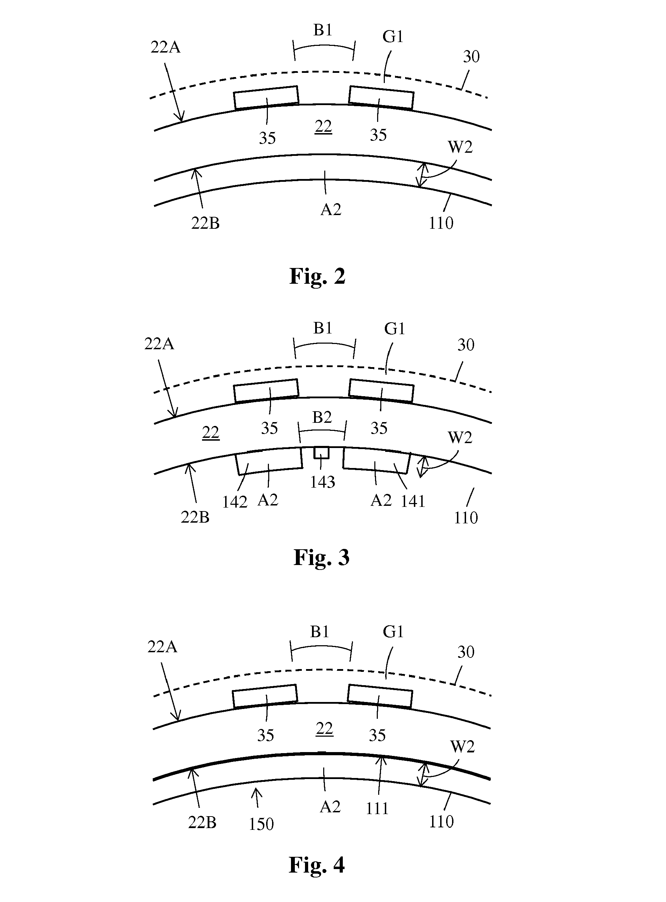

The rotor 20 is attached to the middle portion 11 of the shaft 10 so that the rotor 20 rotates with the shaft 10. The rotor 20 comprises an inner cylinder 21 coaxial with the shaft 10, an outer cylinder 22 coaxial with the shaft 10 and positioned at a radial distance from the inner cylinder 21, and a transverse support flange 23 supporting the outer cylinder 22 at the inner cylinder 21. The inner cylinder 21 is attached to the middle portion 11 of the shaft 10. The outer cylinder 22 has a first axial end E10, a second axial end E20, an inner surface 22B and an outer surface 22A forming an outer rotor surface 22A. Permanent magnets 35 are attached to the outer rotor surface 22A (shown in figures 2-4).

The stator 30 surrounds the rotor 20 and is attached to the frame construction 60 of the electric power generator 200. The stator 30 comprises a cylindrical stator core 31 surrounding the rotor 20 and a stator frame 32. The stator core 31 comprises a stator winding of which only the end portions 31A are shown. The end portions 31A of the stator winding protrude out from the stator core 31 at both axial X-X ends of the stator core 31. The stator frame 32 surrounds the stator core 31 and the stator core 31 is firmly attached to the stator frame 32. The stator frame 32 forms part of the frame construction 60 of the electric power generator 200.

An air gap G1 is formed between the rotor 20 and the stator 30. The air gap G1 has a radial width W1.

The frame construction 60 of the electric power generator 200 comprises a first end portion 61 positioned at a first end E1 of the electric power generator 200 at an axial X-X distance from first axial X-X ends of the rotor 20 and the stator 30. The frame construction 60 of the electric power generator 200 comprises a second opposite end portion 62 positioned at a second end E2 of the electric power generator 200 at an axial X-X distance from opposite second axial X-X ends of the rotor 20 and the stator 30. The frame construction 60 of the electric power generator 200 comprises further a circumference portion 63 surrounding the stator 30.

A first end compartment 71 is formed between the first axial X-X ends of the stator 30 and the rotor 20 and the first end portion 61 of the frame construction 60 of the electric power generator 200. A second end compartment 72 opposite to the first end compartment 71 is formed between the second axial X-X ends of the stator 30 and the rotor 20 and the second end portion 62 of the frame construction 60 of the electric power generator 200.

There is further an outer compartment 81 on top of the electric power generator 200. The outer compartment 81 is provided with a heat exchanger 85 and a fan 86. The fan 86 is driven by an electric motor 87 being positioned outside the outer compartment 81. Cooling air L1 is circulated with the fan 86 from the outer compartment 81 into the second end compartment 72 and further in the axial X-X direction through the rotor 10 and stator 20 to the first end compartment 71. The cooling air L1 is further directed from the first end compartment 71 into the outer compartment 81 and further through the heat exchanger 85 to the fan 86 in the outer compartment 81. The heat exchanger 85 can be an air-to-air or an air-to-water heat exchanger. There are perforations in the circumference portion 63 of the frame construction 60 between the first end compartment 71 and the outer compartment 81 and between the second end compartment 72 and the outer compartment 81. A first axial X-X cooling air channel A1 is provided by the air gap G1 between the rotor 10 and the stator 20. The cooling air flow in the first axial X-X cooling air channel A1 passes in the passages between the permanent magnets 35 and the stator 30 and in the passages between the permanent magnets 35.

A second axial X-X cooling air channel A2 has been provided along the inner surface 22B of the outer cylinder 22 of the rotor 20. This second axial X-X cooling air channel A2 has been achieved with an air guide 100 comprising a cylinder 110. The cylinder 110 extends coaxially within the outer cylinder 22 of the rotor 20 between the axial X-X ends E10, E20 of the outer cylinder 22 of the rotor 20. The transverse support flange 23 in the rotor is solid i.e. air cannot pass through the transverse support flange 23 in the area beyond the second axial X-X cooling air channel A2. The cooling air L1 is thus directed to the first axial X-X cooling air channel A1 and to the second axial X-X cooling air channel A2. The cylinder 110 comprises two portions i.e. a first portion of the cylinder 110 extending between a first end E10 of the cylinder 110 and the transverse support flange 23 of the rotor 20 and a second portion of the cylinder 110 extending between a second end E20 of the cylinder 110 and the transverse support flange 23 of the rotor 20. The ends of the two portions of the 110 terminate against the transverse support flange 23 of the rotor 20 at opposite radial surfaces of the transverse support flange 23 of the rotor 20. Axial X-X openings O1 are only provided in the area of the transverse support flange 23 of the rotor 20 that is positioned within the second axial X-X cooling air channel A2. Cooling air L1 can thus pass along the second axial X-X cooling air channel A2 from one axial X-X end E10 of the outer cylinder 22 of the rotor 20 to the opposite axial X-X end E20 of the outer cylinder 22 of the rotor 20. The cooling air L1 in the second cooling air channel A2 will pass along the inner surface 22B of the outer cylinder 22 of the rotor 20 in both cylinder 110 portions. The cylinder 110 may be supported on the transverse support flange 23 of the rotor and/or on the shaft 10. The second axial cooling air channel A2 has a radial width W2.

It is also possible in another embodiment to close the axial ends E10, E20 of the rotor 20 radially inside the cylinder 110 with radially extending discs 120, 130. A first radially extending end disc 120 may be positioned at a first axial X-X end E10 of the cylinder 110. A second radially extending end disc 130 may be positioned at a second axial X-X end E20 of the cylinder 110. Each of the end discs 120, 130 closes the space between the outer surface of the middle portion 11 of the shaft 10 and the cylinder 110. The second axial air channel A2 is still formed between the inner surface 22B of the outer cylinder 22 of the rotor 20 and the outer surface of the cylinder 110. These end discs 120, 130 are not necessary, but they could contribute in directing the cooling air L1 into the second cooling air channel A2. The cooling air L1 will in any case flow into the second cooling air channel A2 even without the end discs 120, 130 as the transverse support flange 23 forms a barrier for the cooling air L1 in the area beyond the second cooling air channel A2.

Figure 2 shows a radial cross section of the electric power generator according to figure 1. The outer surface of the cylinder 110 is positioned at a radial width W2 from the inner surface 22B of the outer cylinder 22 of the rotor 20. The second axial X-X air channel A2 is thus formed between the outer surface of the cylinder 110 and the inner surface 22B of the outer cylinder 22 of the rotor 20. The permanent magnets 35 are positioned on the outer surface 22A of the outer cylinder 22 of the rotor 20. The permanent magnets 35 run in the axial X-X direction along the outer surface 22A of the outer cylinder 22 of the rotor 20 at a distance B1 from each other. The permanent magnets 35 can be attached directly with glue on the outer surface 22A of the outer cylinder 22 of the rotor 20. Another possibility would be to use a frame structure to attach the magnets 35 to the outer surface 22A of the outer cylinder 22 of the rotor 20. The permanent magnets 35 in each axial X-X row on the outer surface 22A of the outer cylinder 22 of the rotor 20 may comprise several permanent magnets 35 positioned one after the other along the axial X-X length of the rotor 20.

The second axial cooling air channel A2 will make the cooling of the rotor 20 and especially the cooling of the permanent magnets 35 more efficient. A greater amount of heat can be transferred from the permanent magnets 35 through the outer cylinder 22 of the rotor 20 to the cooling air passing in the second axial cooling air channel A2.

Figure 3 shows a radial cross section of a second embodiment of an electric power generator according to the invention. This embodiment differs from the first embodiment shown in figure 2 in that the second axial X-X cooling air channel A2 is formed of axial X-X cooling air channel portions 141, 142 distributed along the circumference of the outer cylinder 22 of the rotor 20 at a distance B2 from each other. The axial X-X cooling air channel portions 141, 142 may be formed of profiles having a cross section with a closed perimeter. The profiles are attached to the inner surface of the outer cylinder 22 of the rotor 20. Each of the profiles may be provided with a planar fastening portion extending outwards from the closed perimeter. The profiles may be attached to the inner surface 22B of the outer cylinder 22 of the rotor 22 with bolts 143 passing through the fastening portion of the profile. End discs 120, 130 could also be used in this embodiment in order to close the axial ends E10, E20 of the rotor 20 in the radial direction inwardly from the second axial X-X cooling air channel A2.

Figure 4 shows a radial cross section of a third embodiment of an electric power generator according to the invention. This embodiment differs from the first embodiment shown in figure 2 in that the second axial X-X cooling air channel A2 is formed by a tube 150 positioned against the inner surface of the outer cylinder 22 of the rotor 20. The tube 150 comprises an inner cylinder 110 and an outer cylinder 111 supported on the inner cylinder 110 with radially extending support beams. The radially extending support beams are so constructed that they limit the axial air flow through the tube 150 as little as possible. The outer cylinder 111 is attached to the inner surface 22B of the outer cylinder 22 of the rotor 20. End discs 120, 130 could also be used in this embodiment in order to close the axial ends E10, E20 of the rotor 20 in the radial direction inwardly from the second axial X-X cooling air channel A2.

The cooling of the electric power generator 200 is an asymmetric cooling. The cooling air L1 circuit passes radially from the fan 86 into the second end compartment 72, axially X-X through the electric power generator to the first end compartment 71, radially out to the outer compartment 81 and through the heat exchanger 85 back to the fan 86.

The second axial X-X cooling air channel A2 extends in the axial direction between the axial ends E10, E20 of the outer cylinder 22 of the rotor and in the radial direction from the inner surface 22A of the outer cylinder 22 of the rotor 20 a predefined radial width W2 inwards towards the shaft 10. The predefined radial width W2 is in the range of 1 to 10 times the radial width W1 of the air gap G1 between the rotor 20 and the stator 30. The radial width W1 of the air gap G1 between the rotor 20 and the stator 30 is measured from the radially outer surface of the permanent magnets 35 or the radially outer surface of fastening means attaching the permanent magnets to the rotor to the radially inner surface of the stator 30.

The radial width W2 between the outer surface of the cylinder 110 in the air guide 100 and the inner surface 22B of the outer cylinder 22 in the rotor 20 is advantageously in the range of 15 to 40 mm. The ratio between the main flow and the bypass flow can be changed by changing said radial width W2.

The invention can advantageously be applied in an electric power generator having a power of at least 5 MW, advantageously at least 10 MW. The shaft height of the electric power generator is advantageously at least 1.0 m. The rotation speed of the electric power generator is in the range of 100 to 500 rpm. Radial cooling through radial air ducts in the rotor or stator are not normally used in these low speed electric power generators. An external fan is thus needed in order to circulate cooling air in the electric power generator.

The electric power generator is advantageously a synchronous generator.

The stator 30 of the electric power generator 200 could be cooled e.g. by a water cooling circuit adapted to the stator 30. No radial cooling air ducts are thus provided in the stator 30.

The invention is not limited to the examples described above but may vary within the scope of the claims.

## Claims

1. An electric power generator comprising a shaft (10), a rotor (20), and a stator (30) surrounding the rotor (20) and being attached to a frame construction (60),
the shaft (10) being rotatably supported with bearings (14, 15) at the frame construction (60),
the rotor (20) comprises an inner cylinder (21) coaxial with the shaft (10), an outer cylinder (22) coaxial with the shaft (10) and positioned at a radial distance from the inner cylinder (21), and a transverse support flange (23) supporting the outer cylinder (22) on the inner cylinder (21), the inner cylinder (21) being attached to the shaft (10), the outer cylinder (22) having a first axial end (E10), a second axial end (E20), an inner surface (22B) and an outer surface (22A) forming an outer rotor surface (22A), permanent magnets (35) being attached to the outer rotor surface (22A),
an air gap (G1) with a radial width (W1) being formed between the rotor (20) and the stator (30), said air gap (G1) forming a first axial (X-X) cooling air channel (A1),
**characterized in that**
a second axial (X-X) cooling air channel (A2) extending in the axial direction between the axial (X-X) ends (E10, E20) of the outer cylinder (22) of the rotor (20) and extending in the radial direction from the inner surface (22B) of the outer cylinder (22) of the rotor (20) a predefined radial width (W2) inwards towards the shaft (10) is formed, said predefined radial width (W2) being in the range of 1 to 10 times the radial width (W1) of the air gap (G1) between the rotor (20) and the stator (30), axial (X-X) openings (O1) being provided in the transverse support flange (23) of the rotor (20) in the area of the second cooling air channel (A2) so that cooling air (L1) can pass through the second axial cooling air channel (A2) between the axial (X-X) ends (E10, E20) of the outer cylinder (22) of the rotor (20).

2. An electric power generator according to claim 1, **characterized in that** the second axial (X-X) air channel (A2) is formed by an air guide (100) comprising a cylinder (110) extending coaxially with the outer cylinder (22) of the rotor (20) between the axial (X-X) ends (E10, E20) of the outer cylinder (22) of the rotor (20), the second axial (X-X) air channel (A2) being formed between the inner surface (22B) of the outer cylinder (22) of the rotor (20) and the outer surface of the cylinder (110), a first portion of the cylinder (110) extending between a first end (E10) of the cylinder (110) and the transverse support flange (23) of the rotor (20) and a second portion of the cylinder (110) extending between a second end (E20) of the cylinder (110) and the transverse support flange (23) of the rotor 20.

3. An electric power generator according to claim 2, **characterized in that** a radially extending disc (120, 130) is positioned at each axial end (E10, E20) of the cylinder (110) closing the space between the outer surface of the shaft (10) and the cylinder (110).

4. An electric power generator according to any one of claims 1 to 3, **characterized in that** the radial width (W2) of the second axial cooling air channel (A2) is in the range of 15 to 40 mm.

5. An electric power generator according to any one of claims 1 to 4, **characterized in that** the permanent magnets (35) run in the axial (X-X) direction on the outer rotor surface (22A).

6. An electric power generator according to claim 5, **characterized in that** the permanent magnets (35) extend along the whole axial (X-X) length of the outer rotor surface (22A).

7. An electric power generator according to claim 5 or 6, **characterized in that** the permanent magnets (35) are positioned on the circumference of the outer rotor surface (22A) at a distance (B1) from each other.

8. An electric power generator according to any one of claims 1 to 7, **characterized in that** the rotation speed of the electric power generator is in the range of 100 to 500 rpm.

9. An electric power generator according to any one of claims 1 to 8, **characterized in that** the power of the electric power generator is at least 5 MW.

10. An electric power generator according to any one of claims 1 to 9, **characterized in that** the electric power generator has a shaft height of at least 1.0 m.

11. An electric power generator according to any one of claims 1 to 10, **characterized in that** the electric power generator is a synchronous generator.
